# EUROPÄISCHE PATENTANMELDUNG

(11) **EP 1 108 650 A1**
(43) Veröffentlichungstag der Anmeldung: **20.06.2001**
(21) Anmeldenummer: 00125469.7
(22) Anmeldetag: 21.11.2000
(51) Int. Cl.: B65B 19/10

(54) **Verfahren und Vorrichtung zum Ausbilden und Überführen von Blöcken von Zigaretten an eine mehrbahnige Packmaschine**

(30) Priorität: 15.12.1999 DE 19960475; 11.03.2000 DE 10011989
(71) Anmelder: TOPACK Verpackungstechnik GmbH, 21493 Schwarzenbek (DE)
(72) Erfinder: Meis, Hartmut, 22359 Hamburg (DE)
(74) Vertreter: Seemann, Ralph, Dr. Dipl.-Phys.

(57) **Zusammenfassung**

Die Erfindung betrifft ein Verfahren und eine Vorrichtung zum Ausbilden und Überführen von Blöcken (13) von Zigaretten (16) an eine mehrbahnige Packmaschine, wobei die Blöcke (13) in Blockbildungsstationen (14, 14', 14'') ausgebildet werden und wobei jeder Block (13) in eine entsprechende Kammer (12) eines Förderers (10) überführt wird.

Das erfindungsgemäße Verfahren zeichnet sich dadurch aus, daß die Blöcke (13) in wenigstens zwei Blockbildungsgruppen (18, 18', 18'') mit wenigstens zwei Blockbildungsstationen (14, 14', 14") je Blockbildungsgruppe (18, 18', 18'') ausgebildet werden.

Die erfindungsgemäße Vorrichtung zeichnet sich dadurch aus, daß wenigstens zwei Blockbildungsgruppen (18, 18', 18'') mit jeweils wenigstens zwei Blockbildungsstationen (14, 14', 14'') vorgesehen sind.

## Beschreibung

Die Erfindung betrifft ein Verfahren zum Ausbilden und Überführen von Blöcken von Zigaretten an eine mehrbahnige Packmaschine, wobei die Blöcke in Blockbildungsstationen ausgebildet werden und wobei jeder Block in eine entsprechende Kammer eines Förderers überführt wird. Die Erfindung betrifft ferner eine Vorrichtung zum Ausbilden und Überführen von Blöcken von Zigaretten an eine mehrbahnige Packmaschine mit Blockbildungsstationen, in denen ein Ausbilden der Blöcke möglich ist und mit einem Förderer, der mehrere Kammern umfaßt, in die die Blöcke überführbar sind, wobei benachbarte Kammern in einem Abstand voneinander angeordnet sind, die dem Abstand der Bahnen der Packungsmaschine entsprechen.

Ein derartiges Verfahren und eine derartige Vorrichtung sind aus der FR-PS 2 012 136 bekannt. In diesem Dokument werden aus zwei nebeneinander angeordneten Blockbildestationen jeweils gleichzeitig zwei Zigarettenblöcke in ein Taschenpaar eingeschoben, welches vor zwei parallele Verpackungsbahnen abgesenkt wird, in die die Blöcke überführt werden.

Bei derartigen Packmaschinen zum Verpacken von Zigarettenblöcken können ausreichend schnell ausgebildete Zigarettenblöcke in Taschen oder Kammern von Förderern überführt werden. Das Ausbilden der Zigarettenblöcke an sich ist allerdings aufgrund der Reibung der in Schächten der Magazine herunterrutschenden Zigaretten und der auf der Erde nicht variablen Erdanziehungskraft begrenzt, so daß das Zeitintervall, innerhalb dessen sich ein Zigarettenblock relativ gesichert ausgebildet hat, eine untere Grenze aufweist, die größer ist als die benötigte Zeit, um diese Zigarettenblöcke zu überführen. Mit der Vorrichtung, die aus der FR-PS 2 012 136 bekannt ist, ist die Menge der ausgebildeten und überführten Blöcke von Zigaretten durch die Ausbildungszeit der Blöcke begrenzt.

Es ist somit Aufgabe der vorliegenden Erfindung, ein Verfahren und eine Vorrichtung zum Ausbilden und Überführen von Blöcken von Zigaretten an eine mehrbahnige Packmaschine zur Verfügung zu stellen, mit der der Durchsatz der ausgebildeten und überführten Blöcke von Zigaretten erhöht wird.

Gelöst wird diese Aufgabe durch ein Verfahren zum Ausbilden und Überführen von Blöcken von Zigaretten an eine mehrbahnige Packmaschine, wobei die Blöcke in Blockbildungsstationen ausgebildet werden und wobei jeder Block in eine entsprechende Kammer eines Förderers überführt wird, das dadurch weitergebildet ist, daß die Blöcke in wenigstens zwei Blockbildungsgruppen mit wenigstens zwei Blockbildungsstationen je Blockbildungsgruppe ausgebildet werden.

Durch diese Verfahrensmerkmale ist es nämlich erfindungsgemäß möglich, deutlich mehr Zigarettenblöcke in einem vorgegebenen Zeitintervall gleichzeitig auszubilden und zu überführen. Insbesondere wird ausgenutzt, daß zwischen dem Überführen der Zigarettenblöcke in die entsprechenden Kammern und dem Wegbewegen dieser Kammern von den Blockbildungsstationen ausreichend Zeit verbleibt, damit sich neue Blöcke von Zigaretten in den Blockbildungsstationen sicher bilden können.

Vorzugsweise fördert der Förderer die Kammern intermittierend in Schritten einer Länge, die gleich dem Abstand zwischen m+1 aufeinanderfolgenden Kammern ist, wobei m eine ganze Zahl ist und der Anzahl der Bahnen der Packmaschine entspricht. Durch diese bevorzugte Ausführungsform der vorliegenden Erfindung ist gewährleistet, daß wenigstens ein Takt, vorzugsweise zwei Takte und insbesondere vorzugsweise drei Takte intermittierende Schritte des Förderers Zeit bleibt, um Zigarettenblöcke in den Blockbildungsstationen, die bei dem vorhergehenden Takt entleert wurden, neu auszubilden. Der Abstand zwischen zwei benachbarten Kammern bedeutet im Rahmen dieser Erfindung insbesondere der Abstand zwischen den Mittellinien der benachbarten Kammern und wird häufig als Teilungsabstand bezeichnet.

Vorzugsweise werden die Blöcke in mxn Blockbildungsstationen ausgebildet, wobei m und n ganze Zahlen sind und jeweils größer oder gleich zwei sind. Ferner vorzugsweise sind m Blockbildungsgruppen mit n Blockbildungsstationen oder n Blockbildungsgruppen mit m Blockbildungsstationen vorgesehen.

Wenn vorzugsweise aus jeder Blockbildungsgruppe jeweils gleichzeitig aus mehreren Blockbildungsstationen Blöcke überführt werden ist eine einfache Verfahrensführung möglich.

Wenn ferner vorzugsweise aus allen Blockbildungsstationen einer Blockbildungsgruppe gleichzeitig Blöcke überführt werden, kann die Packmaschine mit wenig Schiebern ausgeführt werden und ferner ist hierdurch ein hoher Durchsatz von Zigarettenblöcken möglich.

Vorzugsweise werden aus allen Blockbildungsstationen aller Blockbildungsgruppen gleichzeitig Blöcke überführt. Vorzugsweise werden nach jedem zweiten Schritt des Förderers Blöcke überführt. Wenn ferner vorzugsweise aus den Blockbildungsgruppen die Blöcke wechselweise überführt werden, ist ein sehr hoher Durchsatz von Zigarettenblöcken möglich.

Ferner vorzugsweise ist m gleich zwei und n gleich drei oder m gleich drei und n gleich zwei. Vorzugsweise sind also zwei Blockbildungsgruppen mit drei Blockbildungsstationen je Blockbildungsgruppe oder drei Blockbildungsgruppen mit zwei Blockbildungsstationen je Blockbildungsgruppe vorgesehen. Vorzugsweise werden die Blöcke jeweils durch ein ortsfestes Mundstück der Blockbildungsstationen in eine jeweils zugeordnete Tasche überführt, wobei die Tasche anschließend vor die jeweils zugeordnete Kammer des Förderers bewegt wird und wobei dann die Blöcke in die jeweils zugeordnete Kammer überführt werden. Durch dieses vorzugsweise Verfahren werden mögliche Platzprobleme vermieden.

Erfindungsgemäß ist eine Vorrichtung zum Ausbilden und Überführen von Blöcken von Zigaretten an eine mehrbahnige Packmaschine mit Blockbildungsstationen, in denen ein Ausbilden der Blöcke möglich ist und mit einem Förderer, der mehrere Kammern umfaßt, in die die Blöcke überführbar sind, wobei benachbarte Kammern in einem Abstand voneinander angeordnet sind, die dem Abstand der Bahnen der Packmaschine entsprechen dadurch weitergebildet, daß wenigstens zwei Blockbildungsgruppen mit jeweils wenigstens zwei Blockbildungsstationen vorgesehen sind.

Durch diese erfindungsgemäße Ausführungsform der vorliegenden Erfindung ist es möglich, mit einem hohen Durchsatz Blöcke von Zigaretten auszubilden und an eine mehrbahnige Packmaschine zu überführen. Durch diese erfindungsgemäße Vorrichtung wird die Zeit zum Ausbilden der Blöcke von Zigaretten von der Überführungszeit der Zigarettenblöcke in die Kammern des Förderers und schließlich an eine mehrbahnige Packmaschine unabhängiger gestaltet, so daß bei gleichbleibender Zeit des Ausbildens von Zigarettenblöcken mehr Zigarettenblöcke überführt werden können, wobei insbesondere ausgenutzt wird, daß der Takt des Überführens höher ist als der Takt oder die Zeit des Ausbildens der Zigarettenblöcke.

Vorzugsweise sind die Kammern intermittierend in Schritten einer Länge förderbar, die gleich dem Abstand zwischen m+1 aufeinanderfolgenden Kammern ist, wobei m eine ganze Zahl und gleich der Anzahl der Bahnen der Packmaschine ist.

Wenn vorzugsweise mxn Blockbildungsstationen vorgesehen sind, wobei m und n ganze Zahlen sind und jeweils größer oder gleich zwei sind, ist der Durchsatz von Zigaretten bzw. Zigarettenblöcken erhöht. Vorzugsweise sind m Blockbildungsgruppen mit n Blockbildungsstationen oder n Blockbildungsgruppen mit m Blockbildungsstationen vorgesehen. Vorzugsweise ist m gleich zwei und n gleich drei oder m gleich drei und n gleich zwei.

Vorzugsweise sind zwei Blockbildungsgruppen mit jeweils zwei Blockbildungsstationen vorgesehen, wobei die Blockbildungsgruppen in einem Abstand angeordnet sind, der dem Abstand zweier benachbarter Kammern entspricht und die Blockbildungsstationen in einem zweifachen Abstand zweier benachbarter Kammern angeordnet sind. Der Abstand zweier benachbarter Kammern ist insbesondere der Abstand zwischen den Mittellinien der benachbarten Kammern.

Vorzugsweise ist je Blockbildungsstation ein ortsfestes Mundstück vorgesehen, mit dem vorzugsweise die Zigarettenblöcke beim Zuführen zu einer Tasche oder der jeweiligen Kammer zusammendrückbar sind. Vorzugsweise ist je Blockbildungsstation eine bewegbare Tasche vorgesehen, in der Blöcke von Zigaretten zwischenlagerbar sind. Durch diese vorzugsweise Ausführungsform der vorliegenden Erfindung ist es möglich, sehr schnell Zigarettenblöcke abzuführen. Vorzugsweise sind die Taschen vertikal bewegbar. Ferner vorzugsweise sind die Taschen horizontal bewegbar. Durch diese erfindungsgemäße Ausführungsform ist es möglich, die Blockbildungsstationen zueinander bzw. die Blockbildungsstationen einer Blockbildungsgruppe zu Blockbildungsstationen einer anderen Blockbildungsgruppe in einem Abstand anzuordnen, der nicht einem Vielfachen des Abstandes zweier Kammern entspricht. Wenn vorzugsweise die Taschen, die einer Blockbildungsgruppe zugeordnet sind, identisch relativ zum Mundstück insbesondere mit jeweils der gleiche Mimik bewegbar sind, ist eine einfach zu realisierende und wenig Material verbrauchende Ausführungsform möglich.

Die Erfindung wird nachstehend ohne Beschränkung des allgemeinen Erfindungsgedankens anhand von Ausführungsbeispielen unter Bezugnahme auf die Zeichnungen exemplarisch beschrieben, auf die im Übrigen bezüglich der Offenbarung aller im Text nicht näher erläuterten erfindungsgemäßen Einzelheiten ausdrücklich verwiesen wird. Es zeigen:
- Fig. 1: eine schematische Darstellung eines Teils einer Packmaschine gemäß der vorliegenden Erfindung in einem ersten Ausführungsbeispiel in Vorderansicht
- Fig. 2: eine schematische Darstellung einer zweiten Ausführungsform der Erfindung,
- Fig. 3: eine schematische Darstellung einer dritten Ausführungsform der Erfindung,
- Fig. 4: eine schematische Darstellung einer weiteren Ausführungsform der vorliegenden Erfindung,
- Fig. 5: eine Seitenansicht eines Teils einer Ausführungsform der vorliegenden Erfindung in detaillierterer Darstellung.

In den folgenden Figuren sind jeweils gleiche oder entsprechende Teile mit denselben Bezugszeichen bezeichnet, so daß auf eine erneute Vorstellung verzichtet wird und lediglich die Abweichungen der in diesen Figuren dargestellten Ausführungsbeispiele gegenüber dem ersten Ausführungsbeispiel erläutert werden.

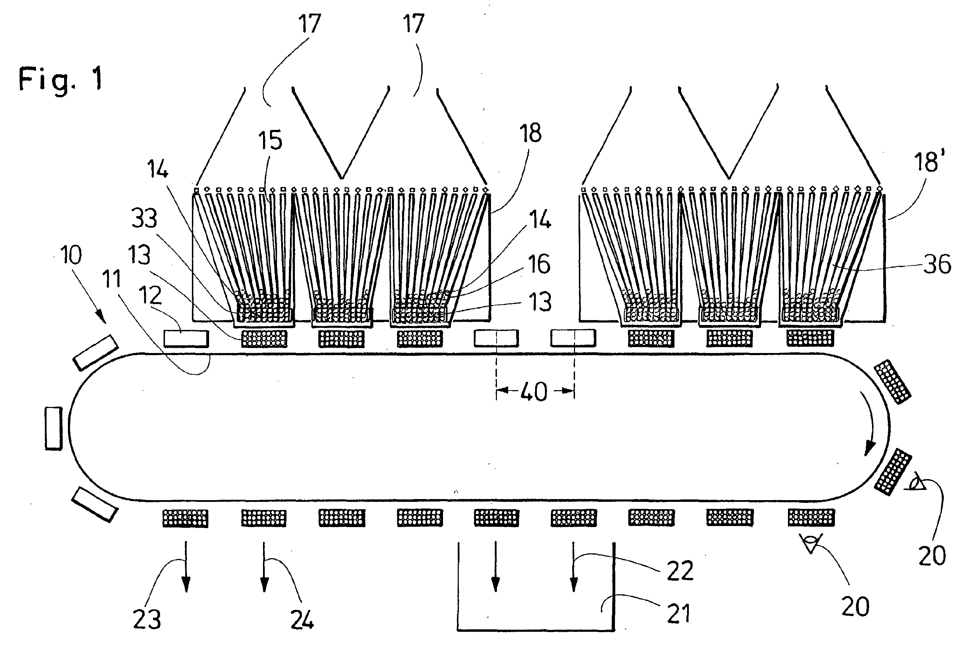

Fig. 1 stellt einen Teil einer Packmaschine und insbesondere eine Vorrichtung zum Ausbilden und Überführen von Blöcken von Zigaretten an eine mehrbahnige Packmaschine schematisch in Vorderansicht dar.

In Fig. 1 ist ein Förderer 10 umfassend ein Förderband 11 mit Kammern 12 dargestellt. Die Kammern sind teilweise leer und teilweise mit Zigarettenblöcken 13 gefüllt. Die Bewegung des Förderbandes 11 ist durch einen Pfeil auf der rechten Seite der Fig. 1 dargestellt. Oberhalb von dem Förderer sind Blockbildungsgruppen 18 und 18' dargestellt, die in diesem Ausführungsbeispiel jeweils aus drei Blockbildungsstationen 14 und 14' bestehen. Die jeweiligen Blockbildungsstationen 14 und 14' weisen jeweils neun Schächte 15 auf, die jeweils ein Magazin bilden, in die Zigaretten 16 von einem Zigarettenstrom, der nicht dargestellt ist, über einen Vorratsbehälter 17 befördert werden. Aufgrund der Schwerkraft fallen die Zigaretten in den Schächten 15 nach unten. Aufgrund der Schwerkraft fallen die Zigaretten danach unten durch die Magazine 36 in die Blockbildungsstationen 14 und 14'. Durch die Schwerkraft werden in den Blockbildungsstationen 14 und 14' Zigarettenblöcke 13 gebildet, die dann entweder direkt in die Kammern 12 überführt werden oder zunächst in eine Tasche 33, die dann vertikal hinter oder vor die Kammern 12 nach unten bewegt wird, wo dann die Zigarettenblöcke 13 in die Kammern 12 überführt werden. Die in den Kammern 12 sich befindlichen Zigarettenblöcke 13 werden durch Sensoren 20 auf deren Vollständigkeit überprüft und ferner auf vollständige Befüllung der jeweiligen Zigaretten mit Tabak. In diesem Fall müssen 27 Zigaretten 16 in den Blöcken vorhanden sein. Sind die Blöcke über die Sensoren 20 als fehlerhaft detektiert worden, werden diese über den Ausstoß 22 oder Auswurf, der schematisch durch Pfeile dargestellt ist, in einen Ausstoßbehälter 21 ausgestoßen oder ausgeworfen. Sofern die Blöcke vollständig sind und die in den Blöcken vorhandenen Zigaretten vollständig mit Tabak gefüllt sind, werden diese auf die Bahnen 23 und 24 der Packmaschine überführt.

Im folgenden soll das Überführen der Zigarettenblöcke 13 von den Blockbildungsstationen 14, 14' bzw. den Blockbildungsgruppen 18 und 18' erläutert werden. Der Förderer 10 fördert die Kammern 12 intermittierend, d.h. in Takten einer gewissen Länge, die dem Abstand von einer Kammer zu der übernächsten Kammer, also drei aufeinanderfolgenden Kammern, entspricht. Ein Abstand 40 zweier benachbarter Kammern entspricht dem Abstand der Verpakkungsbahnen 23 und 24. Der Kammerabstand 40 ist durch den Abstand der Mittellinien zweier benachbarter Kammern definiert und wird auch Teilungsabstand genannt.

Zunächst wird von einem Förderband 11 bzw. Kammernband ausgegangen, dessen Kammern leer sind, um die Erläuterung der Verfahrensführung zu vereinfachen. Bei einem ersten Schritt bzw. einem ersten Takt werden die Zigarettenblöcke 13 der linken Blockbildungsgruppe 18 in die dazugehörigen Kammern überführt. Nach dem nächsten Förderschritt bzw. Fördertakt, bei dem jede Kammer 12 um zwei Kammerpositionen weiter in Förderrichtung bewegt wird, werden die Zigarettenblöcke 13 der rechten Blockbildungsgruppe 18 in die dazugehörigen Kammern 12 überführt. Bei dem dritten Förderschritt des Förderers werden keine Zigarettenblöcke 13 übergeben. Erst bei dem darauffolgenden Förderschritt bzw. Fördertakt werden wieder von den Blockbildungsstationen 14 der Blockbildungsgruppe 18 Zigarettenblöcke in die Kammern übergeben. Nun sind drei Kammern zwischen den gerade befüllten Kammern und den beim ersten Förderschritt bzw. nach dem ersten Förderschritt gefüllten Kammern leer. Diese werden im nächsten Förderschritt bzw. nach dem nächsten Förderschritt bzw. Fördertakt durch die Blockbildungsstationen 14' der Blockbildungsgruppe 18' befüllt.

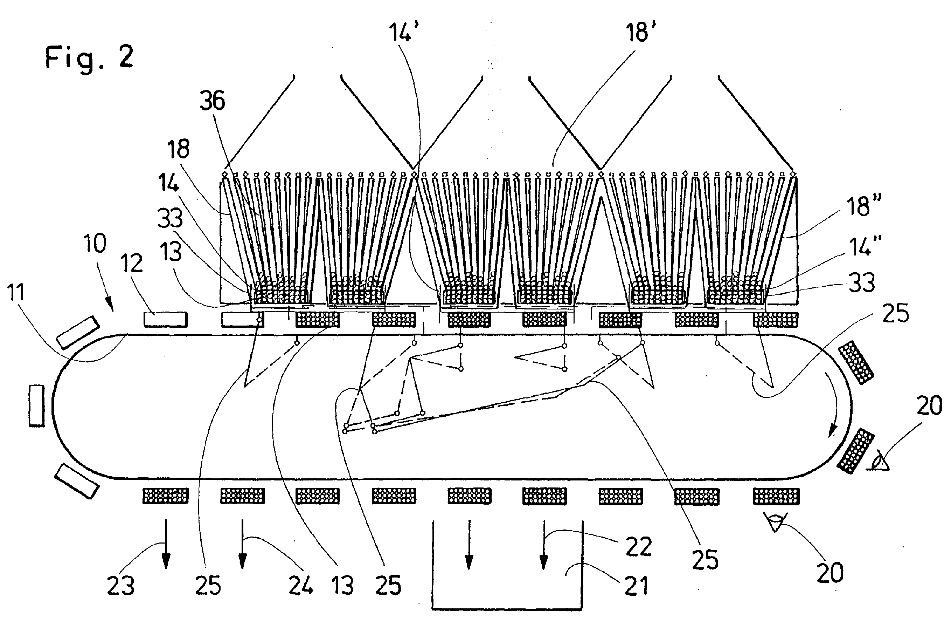

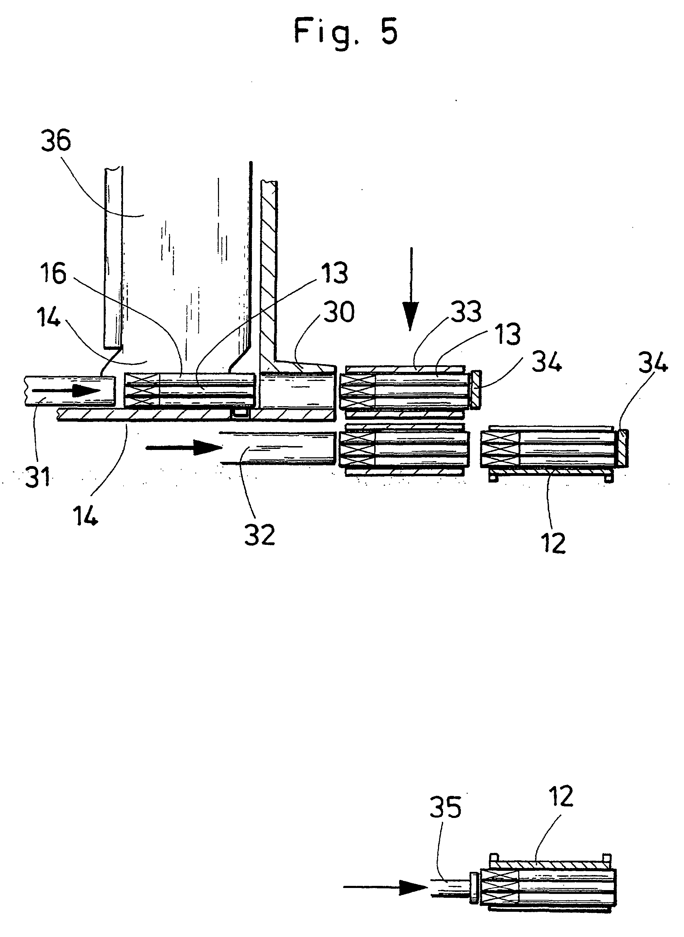

In einem zweiten Ausführungsbeispiel der vorliegenden Erfindung gemäß Fig. 2 sind drei Blockbildungsgruppen 18, 18' und 18'' vorgesehen, die jeweils zwei Blockbildungsstationen 14, 14' und 14'' aufweisen. Es sind ferner Bewegungsmimiken 25 vorgesehen, die die Taschen 33 von einer Position vor den jeweiligen Mundstücken 30 der Blockbildungsstationen 14, 14' und 14'', wobei die Mundstücke 30 in dieser Figur nicht dargestellt sind (siehe Fig. 5), zu einer Position überführbar sind, in der ein Überführen der Zigarettenblöcke 13 in die Kammern 12 möglich ist. Die Bewegungsmimik 25 ist mit durchgezogenen Linien und gestrichelten Linien dargestellt. Die durchgezogenen Linien stellen eine Position der jeweiligen Tasche 33 vor dem jeweiligen Mundstück 30 dar, während die gestrichelten Linien eine Position der Taschen vor bzw. hinter den Kammern 12 darstellen soll.

Bei einem Überführen der Zigarettenblöcke 13 in die Kammern 12 wird wie folgt vorgegangen. Zunächst wird von einem Förderband 11 ausgegangen, dessen Kammern 12 leer sind. Auch in diesem Fall werden Förderschritte vom Förderband 11 durchgeführt, die dem zweifachen des Abstandes der beiden Bahnen 23 und 24 der Packmaschine entsprechen. Bei diesem Ausführungsbeispiel werden die Zigarettenblöcke 13 sämtlicher Blockbildungsstationen 14, 14' und 14'' gleichzeitig in die Taschen 33 überführt. Anschließend werden die Taschen 33 über die Mimiken 25 vor sechs nebeneinander angeordnete Kammern 12 gebracht, so daß ein Überführen der Zigarettenblöcke in die Kammern möglich ist und erfolgt. Erst drei Takte bzw. Förderschritte später wiederholen sich diese Verfahrensschritte. In der Zwischenzeit verbleibt ausreichend Zeit für die Zigaretten in den Blockbildungsstationen 14, 14' und 14'', Zigarettenblöcke 13 zu bilden. In dem Ausführungsbeispiel gemäß Fig. 2 bleiben also drei Takte Zeit, um Zigarettenblöcke 13 zu bilden. In dem Ausführungsbeispiel gemäß Fig. 1 bleiben zwei Takte Zeit, um Zigarettenblöcke 13 zu bilden.

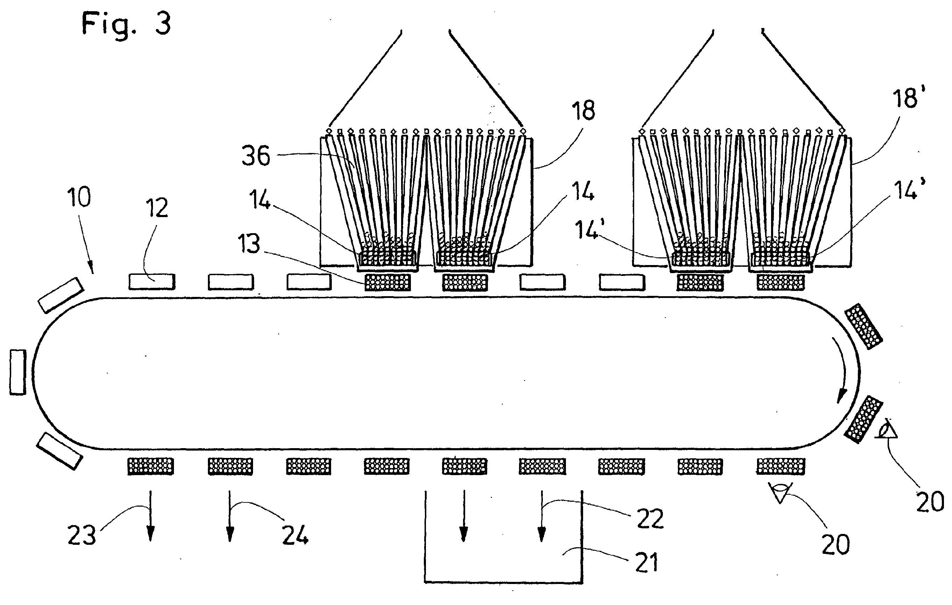

Bei dem Ausführungsbeispiel gemäß Fig. 3 verbleibt den Zigaretten 16 ein Takt bzw. ein Förderschritt Zeit, Zigarettenblöcke 13 zu bilden. In dem Ausführungsbeispiel gemäß Fig. 3 sind zwei Blockbildungsgruppen 18 und 18' vorgesehen, die jeweils zwei Blockbildungsstationen 14 und 14' aufweisen. In diesem Ausführungsbeipiel kann wahlweise gleichzeitig nach jedem zweiten Förderschritt des Förderers ein Überführen der Zigarettenblöcke 13 in die Kammern 12 geschehen oder wechselweise nach jedem Förderschritt des Förderers. In diesem Ausführungsbeispiel ist der Abstand der Blockbildungsgruppen 18 und 18' dreimal so groß wie der Abstand der Bahnen 23 und 24 der Packmaschine und der Abstand der Blockbildungsstationen 14 und 14' in den Blockbildungsgruppen so groß wie der Abstand der Bahnen 23 und 24 der Packmaschine.

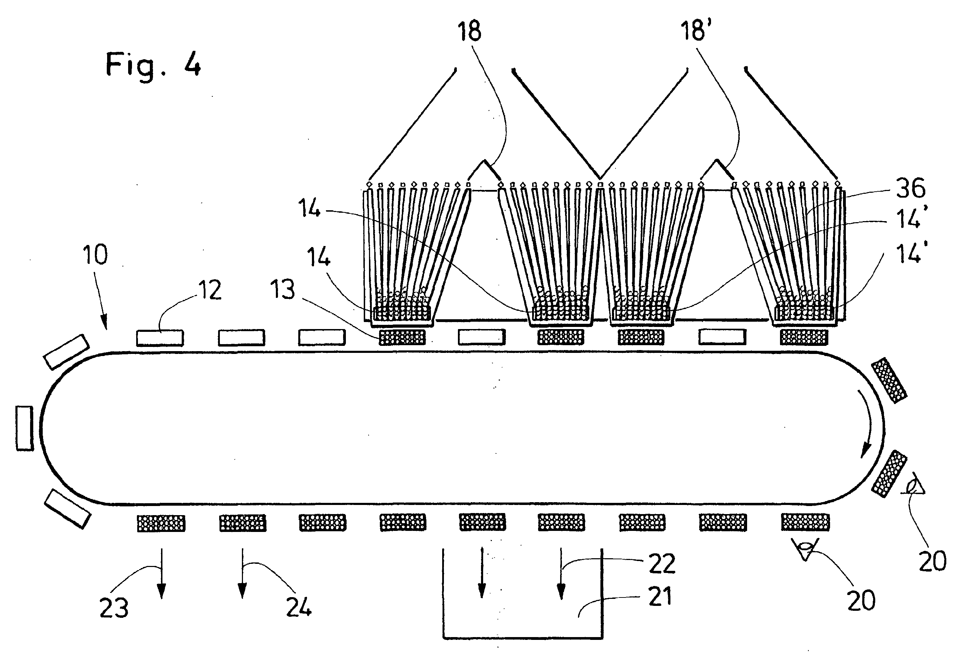

In dem Ausführungsbeispiel gemäß Fig. 4 sind auch zwei Blockbildungsgruppen 18 und 18' mit jeweils zwei Blockbildungsstationen 14 und 14' zu sehen. Der Abstand der Blockbildungsgruppen 18 und 18' entspricht dem Abstand der Bahnen 23 und 24 der Packmaschine.

Das Befüllen der Kammern 12 bzw. das Überführen der Zigarettenblöcke 13 in die Kammern 12 geschieht in dem Ausführungsbeispiel gemäß Fig. 4 wechselseitig. Bei einem ersten Förderschritt werden die Zigarettenblöcke 13 der linken Blockbildungsgruppe 18 überführt. Bei dem nächsten Förderschritt werden die Zigarettenblöcke 13 der rechten Blockbildungsgruppe 18' in die Kammern 12 überführt. Beim nächsten Förderschritt werden wieder die Zigarettenblöcke 13 der linken Blockbildungsgruppe 18 in die zugehörigen Kammern 12 überführt.

Alternativ geschieht das Befüllen der Kammern 12 bzw. das Überführen der Zigarettenblöcke 13 in die Kammern 12 in dem Ausführungsbeispiel gemäß Fig. 4 gleichzeitig nach jedem zweiten Förderschritt des Förderers 10. In dem Ausführungsbeispiel gemäß Fig. 4 entspricht der Abstand der Blockbildungsgruppen 18 und 18' einer Teilung bzw. dem Abstand der Bahnen 23 und 24 der Packmaschine bzw. dem Abstand zweier benachbarter Kammern 12. Der Abstand der Blockbildungsstationen 14 der Blockbildungsgruppe 18 und der Abstand der Blockbildungsstationen 14' der Blockbildungsgruppe 18' beträgt das zweifache dieses Abstandes.

Fig. 5 zeigt eine schematische Seitenansicht einer Blockbildungsstation 14 mit Tasche 33 und einer Kammer 12. Die im Bereich der Blockbildungsstation 14 angeordneten Zigaretten 16 bilden einen Zigarettenblock 13. Dieser Zigarettenblock 13 wird über einen ersten Schieber 31 durch das Mundstück 30 in eine Tasche 33 überführt. Rechts von der Tasche 33 ist in einem geeigneten Abstand ein Stopper 34 angeordnet, damit der Zigarettenblock in die richtige Position in der Tasche 33 überführt wird. In einem nächsten Schritt wird, was durch den Pfeil oberhalb der Tasche 33 angedeutet ist, diese vertikal nach unten bewegt und zwar auf die Höhe der Kammer 12. In einem nächsten Schritt wird mit einem zweiten Schieber 32 der Zigarettenblock 13 dann in die Kammer 12 des Förderbands, das hier nicht dargestellt ist, überführt. Auch hier ist ein Stopper 34 vorgesehen, damit der Zigarettenblock in die richtige Position gebracht wird. Im unteren Bereich der Fig. 5 ist ein Zigarettenblock 13 in einer Kammer 12 dargestellt. Hier ist ein dritter Schieber 35 vorgesehen, der den Zigarettenblock 13 in Pfeilrichtung in eine der Verpakkungsbahnen 23 oder 24 überführt.

Im Rahmen dieser Erfindung bedeutet Block insbesondere auch Gruppe, Menge und Mehrzahl. Ferner bedeutet im Rahmen dieser Erfindung Ausbilden auch Zusammenfassen und Gruppieren.

### Bezugszeichenliste

- 10: Förderer
- 11: Förderband
- 12: Kammer
- 13: Zigarettenblock
- 14: Blockbildungsstation
- 14': Blockbildungsstation
- 14'': Blockbildungsstation
- 15: Schacht
- 16: Zigarette
- 17: Vorratsbehälter
- 18: Blockbildungsgruppe
- 18': Blockbildungsgruppe
- 18'': Blockbildungsgruppe
- 20: Sensor
- 21: Ausstoßbehälter
- 22: Ausstoß
- 23: 1. Bahn
- 24: 2. Bahn
- 25: Bewegungsmimik
- 30: Mundstück
- 31: 1. Schieber
- 32: 2. Schieber
- 33: Tasche
- 34: Stopper
- 35: 3. Schieber
- 36: Magazin
- 40: Kammerabstand

## Patentansprüche

1. Verfahren zum Ausbilden und Überführen von Blöcken (13) von Zigaretten (16) an eine mehrbahnige Packmaschine, wobei die Blöcke (13) in Blockbildungsstationen (14, 14', 14'') ausgebildet werden und wobei jeder Block (13) in eine entsprechende Kammer (12) eines Förderers (10) überführt wird, dadurch gekennzeichnet, daß die Blöcke (13) in wenigstens zwei Blockbildungsgruppen (18, 18', 18'') mit wenigstens zwei Blockbildungsstationen (14, 14', 14'') je Blockbildungsgruppe (18, 18', 18'') ausgebildet werden.

2. Verfahren nach Anspruch 1, dadurch gekennzeichnet, daß der Förderer (10) die Kammern (12) intermittierend in Schritten einer Länge fördert, die gleich dem Abstand zwischen m+1 aufeinanderfolgenden Kammern (12) ist, wobei m eine ganze Zahl ist und der Anzahl der Bahnen (23, 24) der Packmaschine entspricht.

3. Verfahren nach Anspruch 1 und/oder 2, dadurch gekennzeichnet, daß aus jeder Blockbildungsgruppe (18, 18', 18'') jeweils gleichzeitig aus mehreren Blockbildungsstationen (14, 14', 14'') Blöcke überführt werden.

4. Verfahren nach einem oder mehreren der Ansprüche 1 bis 3, dadurch gekennzeichnet, daß aus allen Blockbildungsstationen (14, 14', 14'') einer Blockbildungsgruppe (18, 18',18'') gleichzeitig Blöcke (13) überführt werden.

5. Verfahren nach Anspruch 4, dadurch gekennzeichnet, daß aus allen Blockbildungsstationen (14, 14', 14'') aller Blockbildungsgruppen (18, 18', 18'') gleichzeitig Blöcke (13) überführt werden.

6. Verfahren nach Anspruch 5, dadurch gekennzeichnet, daß nach jedem zweiten Schritt des Förderers (10) Blöcke (13) überführt werden.

7. Verfahren nach Anspruch 4, dadurch gekennzeichnet, daß aus den Blockbildungsgruppen (18, 18', 18'') die Blöcke (13) wechselweise überführt werden.

8. Verfahren nach einem oder mehreren der Ansprüche 1 bis 7, dadurch gekennzeichnet, daß zwei Blockbildungsgruppen (18, 18', 18'') und drei Blockbildungsstationen (14, 14', 14'') je Blockbildungsgruppe oder drei Blockbildungsgruppen (18, 18', 18'') und zwei Blockbildungsstationen (14, 14', 14'') je Blockbildungsgruppe vorgesehen sind.

9. Verfahren nach einem oder mehreren der Ansprüche 1 bis 8, dadurch gekennzeichnet, daß die Blöcke (13) jeweils durch ein ortsfestes Mundstück (30) der Blockbildungsstationen (14, 14', 14'') in eine jeweils zugeordnete Tasche (33) überführt werden, wobei die Tasche (33) anschließend vor die jeweils zugeordnete Kammer (12) des Förderers (10) bewegt wird und wobei dann die Blöcke (13) in die jeweils zugeordnete Kammer (12) überführt werden.

10. Vorrichtung zum Ausbilden und Überführen von Blöcken (13) von Zigaretten (16) an eine mehrbahnige Packmaschine mit Blockbildungsstationen (14, 14', 14'') in denen ein Ausbilden der Blöcke (13) möglich ist und mit einem Förderer (10), der mehrere Kammern (12) umfaßt, in die die Blöcke (13) überführbar sind, wobei benachbarte Kammern (12) in einem Abstand voneinander angeordnet sind, die dem Abstand der Bahnen (23, 24) der Packmaschine entsprechen, dadurch gekennzeichnet, daß wenigstens zwei Blockbildungsgruppen (18, 18', 18'') mit jeweils wenigstens zwei Blockbildungsstationen (14, 14', 14'') vorgesehen sind.

11. Vorrichtung nach Anspruch 10, dadurch gekennzeichnet, daß die Kammern (12) intermittierend in Schritten einer Länge förderbar sind, die gleich dem Abstand zwischen m+1 aufeinanderfolgenden Kammern (12) ist, wobei m eine ganze Zahl und gleich der Anzahl der Bahnen (23, 24) der Packmaschine ist.

12. Vorrichtung nach Anspruch 10 und/oder 11, dadurch gekennzeichnet, daß zwei Blockbildungsgruppen mit jeweils drei Blockbildungsstationen oder drei Blockbildungsgruppen mit jeweils zwei Blockbildungsstationen vorgesehen sind.

13. Vorrichtung nach Anspruch 10 und/oder 11, dadurch gekennzeichnet, daß zwei Blockbildungsgruppen mit jeweils zwei Blockbildungsstationen vorgesehen sind, wobei die Blockbildungsgruppen in einem einfachen Kammerabstand angeordnet sind und die Blockbildungsstationen der Blockbildungsgruppen in einem zweifachen Kammerabstand angeordnet sind.

14. Vorrichtung nach einem oder mehreren der Anprüche 10 bis 13, dadurch gekennzeichnet, daß je Blockbildungsstation (14, 14', 14'') ein ortsfestes Mundstück (30) vorgesehen ist.

15. Vorrichtung nach einem oder mehreren der Ansprüche 10 bis 14, dadurch gekennzeichnet, daß je Blockbildungsstation (14, 14', 14'') eine bewegbare Tasche (33) vorgesehen ist, in der Blöcke (13) von Zigaretten (16) zwischenlagerbar sind.

16. Vorrichtung nach Anspruch 15, dadurch gekennzeichnet, daß die Taschen (33) vertikal bewegbar sind.

17. Vorrichtung nach Anspruch 14 und/oder 15, dadurch gekennzeichnet, daß die Taschen (33) horizontal bewegbar sind.

18. Vorrichtung nach einem oder mehreren der Ansprüche 14 bis 16, dadurch gekennzeichnet, daß die Taschen (33), die einer Blockbildungsgruppe (18, 18', 18'') zugeordnet sind, identisch relativ zum Mundstück (30) insbesondere mit jeweils der gleichen Mimik (25) bewegbar sind.
